# EUROPÄISCHE PATENTANMELDUNG

(11) **EP 1 463 300 A1**
(43) Veröffentlichungstag der Anmeldung: **29.09.2004**
(21) Anmeldenummer: 03006786.2
(22) Anmeldetag: 26.03.2003
(51) Int. Cl.: H04N 5/00, H04N 7/24

(54) **Verfahren und Vorrichtungen zum Senden und Empfangen von Informationen**

(71) Anmelder: BetaResearch GmbH, 85774 Unterföhring (DE)
(72) Erfinder: Boje, Markus, 81675 München (DE); Friedrich, Robert, 80637 München (DE); Frommann, Thomas, 81667 München (DE)
(74) Vertreter: Heselberger, Johannes

(57) **Zusammenfassung**

Modul 7 für einen Empfänger 1, wobei das Modul 7 mindestens eine Eingangs- /Ausgangsschnittstelle 8, mindestens einen Prozessor 9 und mindestens ein Speichermedium 10 aufweist, wobei die mindestens eine Eingangs- / Ausgangsschnittstelle 8 derart ausgebildet und in dem Modul 7 angeordnet ist, Daten in einem Datenstrom zu empfangen und zu senden, das mindestens eine Speichermedium 10 derart ausgebildet und in dem Modul 7 angeordnet ist, Informationen zu speichern, und der mindestens eine Prozessor 9 derart ausgebildet und in dem Modul 7 angeordnet ist, die auf dem Speichermedium 10 gespeicherte Informationen, gegebenenfalls zusammen mit empfangenen Daten, in einem Datenstrom über die Eingangs- / Ausgangsschnittstelle 8 zu senden sowie ein Verfahren zum Senden von Informationen in einem Datenstrom mit einem Modul 7 für einen Empfänger und ein Verfahren zum Empfangen von Informationen in einem Datenstrom in einem Modul 7 für einen Empfänger 1.

## Beschreibung

Die vorliegende Erfindung betrifft Verfahren und Vorrichtungen zum Senden und Empfangen von Information für einen Empfänger für digitale Daten.

Die digitalen Daten, wie beispielsweise Audio- und Video -Daten, können in einem Format gemäß Digital Video Broadcasting (DVB) Standard von einem Sender zu einem Empfänger übertragen werden. Die Übertragung kann über Satellit, über Kabel, terrestrisch oder auch über andere auf dem Internet-Protokoll (IP) basierende Medien, wie beispielsweise ATM oder Internet erfolgen. Dabei können die Daten verschlüsselt oder unverschlüsselt übertragen werden.

In dem Empfänger werden die Daten in einem Tuner, einem Demodulator, einem Demultiplexer, einem Decoder und gegebenenfalls weiteren Einheiten bearbeitet, bevor sie als Audio und Video-Signale beispielsweise an ein Fernsehgerät weitergeleitet werden. In dem Standard ETSI TS 101 812 wird die Funktionalität der Empfänger definiert, damit alle Empfänger zum Empfangen von Daten von unterschiedlichen Anbietern verwendet werden können.

Darüber hinaus verfügen die Empfänger über Steckplätze für Module. Ein Beispiel für ein solches Modul ist ein sogenanntes Sicherheitsmodul das sicherstellt, dass verschlüsselte Daten nur von Berechtigten wieder entschlüsselt werden. Die Anforderungen an so ein Sicherheitsmodul werden in dem Standard EN 50221 beschrieben.

Im Rahmen der Übertragung von digitalen Daten können auch besondere Daten, sogenannte Informationen übertragen werden. Hierbei handelt es sich zum Beispiel um Informationen, die von Anwendungen auf dem Empfänger benötigt werden beziehungsweise verarbeitet werden können. Mit Hilfe dieser Informationen können dem Benutzer eines Empfängers beispielsweise Informationsdienste oder bestimmte Anwendungsprogramme angeboten werden. Die Informationen können beispielsweise verwendet werden, um Anwendungen einer sogenannten "Multimedia Home Platform" (MHP) zu betreiben.

Diese Informationen können dem Empfänger von einem Sender zusammen mit den Daten bereitgestellt werden. Allerdings ist diese Art der Bereitstellung der Informationen für den Anbieter der Daten sehr kostenintensiv, da er für die Übertragung von zusätzlichen Daten mehr Bandbreite kaufen muss. Alternativ kann der Anbieter die Informationen mit einer relativ geringen Bandbreite übertragen. Dies führt allerdings dazu, dass der Benutzer am Empfänger relativ lang warten muss bis die von ihm ausgewählte Anwendung mit den dafür notwendigen Informationen gestartet werden kann.

Aufgrund dessen stellt sich die Aufgabe Verfahren und Vorrichtungen bereitzustellen mit denen die Informationen dem Empfänger kostengünstig und effektiv bereitgestellt werden können.

Die Aufgabe wird erfindungsgemäß durch ein Verfahren zum Senden von Informationen in einem Datenstrom mit einem Modul für einen Empfänger gelöst, wobei das Modul mindestens eine Eingangs- / Ausgangsschnittstelle, mindestens einen Prozessor und mindestens ein Speichermedium aufweist. Im Rahmen des Verfahrens werden mindestens die folgenden Schritte ausgeführt:
- Empfangen von Daten in einem Datenstrom über die mindestens eine Eingangs- / Ausgangsschnittstelle des Moduls,
- Einfügen von auf dem Speichermedium des Moduls gespeicherten Informationen in den Datenstrom mit Hilfe des mindestens einen Prozessors, und
- Senden des Datenstroms zusammen mit den eingefügten Informationen über die Eingangs- / Ausgangsschnittstelle.

Gemäß der vorliegenden Erfindung werden die Informationen durch ein Modul für den Empfänger bereitgestellt. Dieses Modul weist eine Eingangs- / Ausgangsschnittstelle auf. Vorzugsweise ist das Modul über diese Schnittstelle mit dem Empfänger verbunden. Ein bevorzugtes Beispiel für dieses Modul ist ein sogenanntes Sicherheitsmodul, welches von dem Anbieter der digitalen Daten für die Verwendung mit einem Empfänger bereitgestellt wird. Die Informationen können aber auch durch extra dafür vorgesehene Module in den Datenstrom eingefügt werden. Um die Informationen einfügen zu können, weist das Modul erfindungsgemäß ein Speichermedium und einen Prozessor auf. Auf dem Speichermedium sind die einzufügenden Informationen gespeichert und der Prozessor führt das Einfügen durch.

Im Rahmen der Erfindung empfängt das Modul über die Eingangs- / Ausgangsschnittstelle Daten in einem Datenstrom. Hierbei handelt es sich vorzugsweise um einen sogenannten MPEG Transportstrom, der ein oder mehrerer Audio- und Video-Kanäle und/oder Zusatzinformationen zu dem Programminhalt und zu der Signalisierung dieser Inhalte enthält. Dieser Datenstrom kann darüber hinaus noch weitere Inhalte enthalten. In den empfangenen Datenstrom fügt dann der Prozessor auf dem Speichermedium gespeicherte Informationen ein. Dieser Datenstrom mit eingefügten Informationen wird dann über die Eingangs- / Ausgangsschnittselle gesendet.

Durch das erfindungsgemäße Verfahren wird erstmals ermöglicht Informationen kostengünstig und effektiv an den Benutzer zu übertragen. Durch die Speicherung der Informationen in dem Modul ist keine zusätzliche Bandbreite für die Übertragung zwischen Sender und Empfänger notwendig und dem Benutzer können die Informationen ohne lange Ladezeiten bereitgestellt werden. Darüber hinaus muss durch die Realisierung in einem Modul an dem standardisierten Empfänger nichts verändert werden.

Durch die Speicherung der Informationen auf einem Modul, können die unterschiedlichen Anbieter ihren Kunden auch unterschiedliche Anwendungen bereitstellen. Dies kann durch Speicherung der Informationen in dem Sicherheitsmodul des Anbieters oder auch in separaten Modulen, die auch von den Anbietern bereitgestellt werden können, ermöglicht werden. Die Schnittstelle zu dem Sicherheitsmodul ist z.B. in der Spezifikation EN 50221 beschrieben.

Im Rahmen der vorliegenden Erfindung können die Informationen auf unterschiedliche Weise in den Datenstrom eingefügt werden. Die Art des Einfügens hängt dabei von der Schnittstelle zwischen dem Modul und dem Empfänger ab. Wenn es die Schnittstelle ermöglicht, werden die Informationen vorzugsweise zusätzlich zu dem empfangenen Datenstrom an den Empfänger gesendet und damit die entsprechende Bandbreite erhöht. Sollte aber so ein Hinzufügen der Informationen nicht möglich sein, wird im Rahmen der vorliegenden Erfindung vorzugsweise eines der folgenden Verfahren verwendet.

In einer bevorzugten Ausführungsform der vorliegenden Erfindung werden die Informationen in freie Bereiche in dem Datenstrom eingefügt, das heißt, wenn die volle Kapazität des Datenstroms nicht benutzt wird. Hierdurch wird sichergestellt, dass auch wenn zusätzlich zu den vorhandenen Daten in dem Datenstrom Informationen eingefügt werden, die Übertragung der Daten nicht beeinflusst wird. Durch dieses sogenannte "zero packet filling" wird der normale Datenstrom nicht beeinflusst und trotzdem die gewünschten Informationen an den Empfänger gesendet.

In einer anderen bevorzugten Ausführungsform werden in dem Modul Daten in dem Datenstrom gelöscht und dafür Informationen eingefügt. Dieses Ersetzen von Daten durch Informationen ist insbesondere dann zweckmäßig, wenn nicht alle in dem Datenstrom übertragenen Daten von dem Empfänger verwendet werden. Um zu entscheiden, welche Informationen gelöscht werden können, gibt es mehrere Möglichkeiten, die im Folgenden beschrieben werden.

In einer bevorzugten Ausführungsform weist das Modul eine Befehlsschnittstelle auf. Diese Befehlsschnittstelle wird verwendet, um dem Modul mitzuteilen, welche Informationen wie in den Datenstrom eingefügt werden sollen. In Abhängigkeit von den über die Befehlsschnittstelle übermittelten Daten werden dann die ausgewählten Informationen in den Datenstrom eingefügt. Dabei definieren die über die Befehlsschnittstelle übermittelten Daten vorzugsweise sowohl die zu sendenden Informationen, als auch die Art, wie die Informationen in den Datenstrom eingefügt werden sollen. Es kann aber auch nur eine der beiden Definitionen übertragen werden. Zusätzlich können die über die Befehlsschnittstelle übermittelten Daten noch angeben, wann die Informationen eingefügt werden sollen. Bei dieser Ausführungsform muss allerdings der Empfänger über eine entsprechend angepasste Schnittstelle verfügen. Ein solche Anpassung des Empfängers ist aber bei den im Folgenden beschriebenen Ausführungsformen nicht notwendig.

In einer anderen bevorzugten Ausführungsform weist das Modul auch eine Befehlsschnittstelle auf. Hierbei handelt es sich um die in dem Standard für Sicherheitsmodule definierte Befehlsschnittstelle. Über diese Schnittstelle werden gemäß dem Standard Daten an das Modul übertragen, die angeben, welcher der Kanäle entschlüsselt werden soll. Auf der Grundlage dieser Daten kann in dem Modul ermittelt werden, welche Teile des Datenstrom, z.B. bestimmte Kanäle von dem Empfänger nicht verwendet wird. Die Daten der nicht verwendeten können dann durch die zu übertragenden Informationen ersetzt werden.

In einer weiteren bevorzugten Ausführungsform werden dem Modul von dem Sender der Daten in dem Datenstrom Daten gesendet, aufgrund derer das Modul erkennen kann, welche Daten im Datenstrom bevorzugt ersetzt werden können.

In einer anderen bevorzugten Ausführungsform löscht das Modul die an den Empfänger zu sendenden Daten derart, dass sie lediglich in schlechterer Qualität beim Empfänger ankommen.

In einer weiteren bevorzugten Ausführungsform wird die Befehlsschnittstelle zur Übertragung weiterer Daten verwendet. Mit Hilfe dieser Daten kann eine Anwendung auf dem Empfänger das Modul informieren, welche Informationen wann in den Datenstrom eingefügt werden sollen. Durch diese Kommunikationsmöglichkeit kann die Menge an Informationen, die das Modul am Anfang bereitstellt, relativ gering gehalten werden. So kann das Modul beispielsweise am Anfang der Kommunikation mit dem Empfänger Informationen senden, die zum Aufbau einer kleinen Startanwendung benötigt werden. Das Laden und das Aufbauen der Startanwendung kann automatisch erfolgen, wie im Standard ETSI TS 101 812, insbesondere Kapitel 10, Application Signalling beschrieben. Sobald der Aufbau der Anwendung abgeschlossen ist, kann der Empfänger mit Hilfe der Startanwendung dem Modul über die Befehlsschnittstelle mitteilen, welche Informationen benötigt werden. Das Modul kann also den Einfügevorgang in dem Modul steuern. Dies ermöglicht eine effektive Kommunikation zwischen dem Empfänger und dem Modul innerhalb der Vorgaben durch den Standard.

Über die Befehlsschnittstelle können auch weitere Daten ausgetauscht werden, wie zum Beispiel der aktuelle Zustand des Empfängers oder Daten die angeben, wo in dem Datenstrom die Informationen eingefügt wurden. Dieser Datenaustausch kann durch Anwendungen in dem Empfänger ermöglicht oder unterstützt werden.

In einer weiter bevorzugten Ausführungsform der vorliegenden Erfindung weist das Verfahren zusätzlich folgende Schritte auf:
- Empfangen von Daten und Informationen in einem Datenstrom über die mindestens eine Eingangs- / Ausgangsschnittstelle,
- Auswählen der Informationen in dem Datenstrom mit Hilfe des mindestens einen Prozessors, und
- Speichern der ausgewählten Informationen auf dem Speichermedium des Moduls.
   Durch diese Verfahrensschritte können neue Informationen auf dem Speichermedium gespeichert werden. Diese Informationen können die ersten Informationen sein, die auf dem Speichermedium gespeichert werden. Im Rahmen der vorliegenden Erfindung können diese Informationen aber auch zusätzlich zu den bereits vorhandenen Informationen gespeichert werden, oder bestimmte gespeicherte Informationen ersetzen. Mit Hilfe dieser Verfahrensschritte wird ermöglicht, dass ohne Verwendung von zusätzlicher Bandbreite oder mit einer geringeren Vergrößerung der Bandbreite die Informationen auf dem Speichermedium immer auf dem neusten Stand sind. In einer bevorzugten Ausführungsform der vorliegenden Erfindung können diese Verfahrensschritte auch durchgeführt werden, wenn der Empfänger im Bereitschaftsmodus betrieben wird.

Im Rahmen der vorliegenden Erfindung wird auch ein Verfahren zum Empfangen von Informationen in einem Datenstrom in einem Modul für einen Empfänger beansprucht, wobei das Modul mindestens eine Eingangs- / Ausgangsschnittstelle, mindestens einen Prozessor und mindestens ein Speichermedium aufweist und das Verfahren folgenden Schritte aufweist:
- Empfangen von Daten und Informationen in einem Datenstrom über die mindestens eine Eingangs- / Ausgangsschnittstelle,
- Auswählen der Informationen in dem Datenstrom mit Hilfe des mindestens einen Prozessors, und
- Speichern der ausgewählten Informationen auf dem Speichermedium des Moduls.
   Durch das erfindungsgemäße Verfahren können die Informationen vom Sender bis zum Empfänger mit geringer Bandbreite übertragen und in dem Modul gespeichert werden. Die Weiterleitung der Informationen an den Empfänger ist dann allerdings unabhängig von der Bandbreite zwischen dem Sender und dem Empfänger und kann deshalb einfach an die gewünschten Bedürfnisse angepasst werden.

Im Rahmen der vorliegenden Erfindung wird auch ein Modul für einen Empfänger beansprucht, wobei das Modul mindestens eine Eingangs- / Ausgangsschnittstelle, mindestens einen Prozessor und mindestens ein Speichermedium aufweist. Dabei ist die mindestens eine Eingangs- / Ausgangsschnittstelle ausgebildet und in dem Modul angeordnet, um Daten in einem Datenstrom zu empfangen und zu senden. Das mindestens eine Speichermedium ist ausgebildet und in dem Modul angeordnet, um Informationen zu speichern und der mindestens eine Prozessor ist ausgebildet und in dem Modul angeordnet, um die auf dem Speichermedium gespeicherte Informationen, gegebenenfalls zusammen mit empfangenen Daten, in einem Datenstrom über die Ausgangsschnittstelle zu senden.

In einer bevorzugten Ausführungsform der vorliegenden Erfindung ist der mindestens eine Prozessor auch derart ausgebildet und in dem Modul angeordnet, Informationen aus dem empfangenen Datenstrom auszuwählen und auf dem Speichermedium zu speichern.

Gemäß der vorliegenden Erfindung weist das Modul auch mindestens eine Befehlsschnittstelle auf und der Prozessor ist derart ausgebildet und in dem Modul angeordnet, dass er in Abhängigkeit von über die Befehlsschnittstelle empfangenen Daten, die auf dem Speichermedium gespeicherten Informationen sendet.

Durch die Verwendung der Befehlsschnittstelle kann das Senden der Informationen noch effektiver gestaltet werden.

In einer bevorzugten Ausführungsform weist das Modul auch einen Descrambler zum Entschlüsseln von Daten auf. Ein derartiges Sicherheitsmodul kann von dem Anbieter der Daten dem Benutzer bereitgestellt werden. Hierfür verfügt das Sicherheitsmodul über die Schlüssel, die zum Entschlüsseln von verschlüsselten Daten notwendig sind. Diese Schlüssel können dem Modul aber auch durch ein weiteres Element, beispielsweise eine SmartCard bereitgestellt werden. Bei Verwendung des erfindungsgemäßen Moduls kann der Anbieter dem Benutzer zusätzlich zu den für die Entschlüsselung notwendigen Schlüsseln noch Informationen für Anwendungen bereitstellen. Ein Beispiel für solche Informationen ist zum Beispiel ein Programm, um den Benutzer durch das Angebot des Anbieters zu führen.

Im Rahmen der vorliegenden Erfindung wird auch ein Empfänger zum Empfangen von digitalen Daten mit dem oben beschriebenen Modul beansprucht.

Die Erfindung wird anhand einer Ausführungsform mit der Hilfe der folgenden Figuren beschrieben, wobei
- Fig. 1: den Aufbau eines Empfängers zum Empfangen von Daten und eines Ausführungsbeispiels eines erfindungsgemäßen Moduls darstellt,
- Fig. 2: die Kommunikation zwischen einem Sender und einem Empfänger veranschaulicht, und
- Fig. 3: ein Flussdiagramm mit Schritten des beanspruchten Verfahrens zeigt.

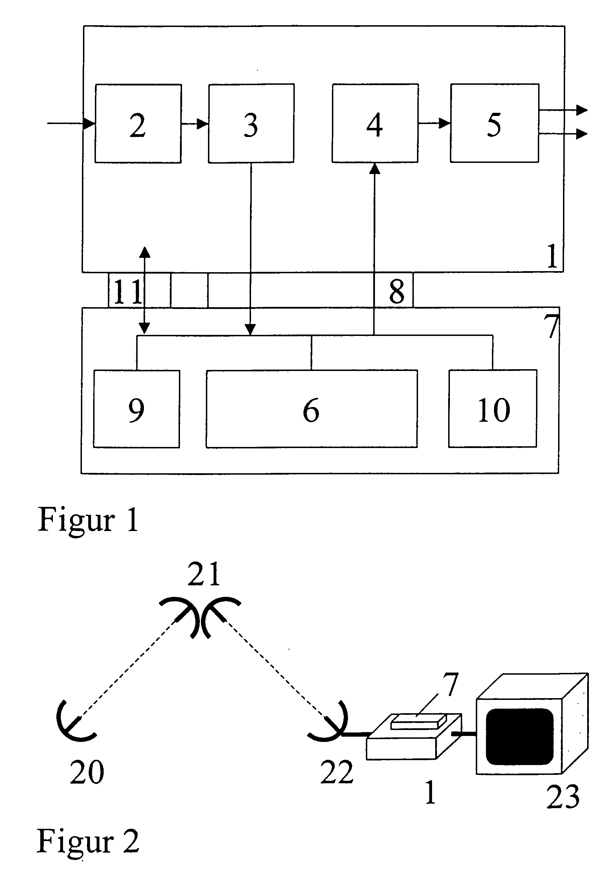

Figur 1 zeigt eine Ausführungsform eines Empfängers 1, wie er im Rahmen der vorliegenden Erfindung verwendet werden kann. Der Empfänger 1 enthält einen Tuner 2, einen Demodulator 3, einen Demultiplexer 4 und einen Decoder 5 zur Bearbeitung von empfangenen Signalen.

Ein solcher Empfänger wird zwischen einen Sender und ein Gerät zur Verwendung der empfangenen Signale geschaltet. Figur 2 gibt diese Anordnung beispielhaft wieder. Der Sender 20 verfügt über eine Antenne und sendet damit über ein Relais 21 Daten an eine Empfangsantenne 22. Bei den Daten kann es sich um jegliche Art Daten handeln. Im vorliegenden Beispiel werden Audio und Video-Daten zusammen mit administrativen Daten und Informationen gesendet. Von der Empfangsantenne 22 werden die Daten an einen Empfänger 1 weitergeleitet, der die Daten, gegebenenfalls mit Hilfe eines Moduls 7 bearbeitet und dann beispielsweise einem Fernsehgerät 23 bereitstellt.

In dem Empfänger 1 werden die Daten mit Hilfe des Tuners 2, des Demodulators 3, des Demultiplexers 4 und des Decoders 5 bearbeitet, um dem Fernsehgerät 23 ein verarbeitbares Signal bereitzustellen. Wenn die Daten verschlüsselt gesendet werden, benötigt der Empfänger 1 noch einen Descrambler 6, um die Daten zu entschlüsseln. In der in Figur 1 dargestellten Ausführungsform befindet sich der Descrambler 6 in einem mit dem Empfänger 1 verbundenen Modul 7. Dieses Modul 7 ist über eine Eingangs- / Ausgangsschnittstelle 8 mit dem Empfänger 1 verbunden. Im Rahmen der vorliegenden Erfindung weißt das Modul 7 darüber hinaus noch einen Prozessor 9 und ein Speichermedium 10 auf.

In der vorliegenden Ausführungsform weisen das Modul 7 und der Empfänger 1 jeweils eine Befehlsschnittstelle 11 auf, über die die beiden Vorrichtungen miteinender kommunizieren können.

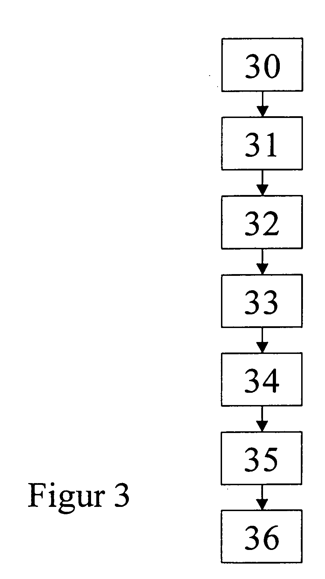

Eine Ausführungsform des Verfahrens gemäß der vorliegenden Erfindung wird im folgenden anhand des in Figur 3 dargestellten Flussdiagramms beschrieben. In einem ersten Zustand 30 empfängt das Modul 7 über die Eingangs- / Ausgangsschnittstelle 8 von dem Empfänger 1 empfangene verschlüsselte und unverschlüsselte Daten in einem Datenstrom. Diese Daten werden durch das Modul 7 durchgeleitet und über die Eingangs- / Ausgangsschnittstelle 8 wieder zum dem Empfänger 1 zurückgesendet. In einem weiteren Schritt 31 empfängt das Modul 7 über die Befehlsschnittstelle 11 von dem Empfänger eine Aufforderung bestimmte Daten zu entschlüsseln. Diese in der Aufforderung bestimmten verschlüsselten Daten werden nun in Schritt 32 durch den Descrambler 6 geleitet. In dem Descrambler 6 werden die verschlüsselten Daten mit Hilfe von in dem Modul 7 gespeicherten Schlüsseln, oder mit Hilfe von Schlüsseln, die für das Modul 7 zugänglich gespeichert sind, beispielsweise auf einer in das Modul eingeschobenen SmartCard, entschlüsselt und über die Eingangs- / Ausgangsschnittstelle 8 an den Empfänger 1 gesendet.

In dem in Figur 3 veranschaulichten Beispiel empfängt das Modul 7 in Schritt 33 über die Befehlsschnittstelle 11 eine weitere Auforderung von dem Empfänger 1 oder das Modul selber generiert aufgrund der signalisierten Informationen oder der im Modul gespeicherten Informationen eine Aufforderung. In dieser Aufforderung wird das Modul 7 aufgefordert bestimmte Informationen an den Empfänger 1 zu senden. Diese Informationen können beispielsweise Daten zu Initialisierung eines Programms, ein Programm selber oder Informationen für ein Programm sein. Die zu senden Informationen sind in der Aufforderung so genau spezifiziert, dass der Prozessor 9 in dem Modul 7 in Schritt 34 diese Informationen auf dem Speichermedium 10 auswählen kann.

Zusammen mit der Aufforderung hat das Modul 7 in dem vorliegenden Beispiel über die Befehlsschnittstelle in Schritt 33 eine Aufforderung bekommen, wie die Informationen in den Datenstrom eingefügt werden sollen. Dies kann in Schritt 35 zum Beispiel durch Weglassen von solchen Daten geschehen, die zur Zeit nicht verwendet werden. Hierbei kann es sich beispielsweise um ein Programm handeln, dass zwar in dem empfangenen Datenstrom enthalten ist, aber für das der Benutzer keine Berechtigung hat und deshalb auch nicht entschlüsseln kann. Dieses Weglassen der entsprechenden Daten merkt der Benutzer nicht. Dafür wird aber Bandbreite für das Einfügen der Informationen bereitgestellt. Anschließend werden die Informationen in Schritt 36 gesendet.

Im Rahmen der vorliegenden Erfindung kann allerdings das erfindungsgemäße Modul 7 auch ohne Kommunikation über eine Befehlsschnittstelle 11 die richtigen Daten entschlüsseln und in sinnvoller Weise die gespeicherten Informationen in den Datenstrom einfügen. So kann das Modul 7 beispielsweise versuchen alle ankommenden Daten zu entschlüsseln und alle erfolgreich entschlüsselten Daten weiterleiten. Und auch die gespeicherten Informationen können von dem Modul 7 kontinuierlich in den Datenstrom eingefügt werden.

## Patentansprüche

1. Verfahren zum Senden von Informationen in einem Datenstrom mit einem Modul 7 für einen Empfänger 1, wobei das Modul 7 mindestens eine Eingangs- / Ausgangsschnittstelle 8, mindestens einen Prozessor 9 und mindestens ein Speichermedium 10 aufweist und das Verfahren mindestens die folgenden Schritte aufweist:
- Empfangen von Daten in einem Datenstrom über die mindestens eine Eingangs- / Ausgangsschnittstelle 8 des Moduls 7,
- Einfügen von auf dem Speichermedium 10 des Moduls 7 gespeicherten Informationen in den Datenstrom mit Hilfe des mindestens einen Prozessors 9, und
- Senden des Datenstroms zusammen mit den eingefügten Informationen über die Eingangs- / Ausgangsschnittstelle 8.

2. Verfahren nach Anspruch 1, wobei die Informationen in freie Bereiche in dem Datenstrom eingefügt werden.

3. Verfahren nach einem der Ansprüche 1 oder 2, wobei für das Einfügen der Informationen in den Datenstrom, Daten in dem Datenstrom gelöscht werden.

4. Verfahren nach einem der Ansprüche 1 bis 3, wobei das Modul 7 eine Befehlsschnittstelle 11 aufweist und wobei die gespeicherten Informationen in Abhängigkeit von Daten eingefügt werden, die über die Befehlsschnittstelle 11 empfangen werden.

5. Verfahren nach Anspruch 4, wobei das Modul 7 auf der Grundlage der über die Befehlsschnittstelle 11 empfangenen Daten erkennt, welcher Teil des Datenstroms vom Empfänger nicht verwendet wird.

6. Verfahren nach einem der Ansprüche 1 bis 5, wobei das Verfahren zusätzlich die folgenden Schritte aufweist:
- Empfangen von Daten und Informationen in einem Datenstrom über die mindestens eine Eingangs- / Ausgangsschnittstelle 8,
- Auswählen der Informationen in dem Datenstrom mit Hilfe des mindestens einen Prozessors 9, und
- Speichern der ausgewählten Informationen auf dem Speichermedium 10 des Moduls 7.

7. Verfahren zum Empfangen von Informationen in einem Datenstrom in einem Modul 7 für einen Empfänger 1, wobei das Modul 7 mindestens eine Eingangs- / Ausgangsschnittstelle 8, mindestens einen Prozessor 9 und mindestens ein Speichermedium 10 aufweist und das Verfahren die folgenden Schritte aufweist:
- Empfangen von Daten und Informationen in einem Datenstrom über die mindestens eine Eingangs- / Ausgangsschnittstelle 8,
- Auswählen der Informationen in dem Datenstrom mit Hilfe des mindestens einen Prozessors 9, und
- Speichern der ausgewählten Informationen auf dem Speichermedium 10 des Moduls 7.

8. Modul 7 für einen Empfänger 1, wobei das Modul 7 mindestens eine Eingangs- / Ausgangsschnittstelle 8, mindestens einen Prozessor 9 und mindestens ein Speichermedium 10 aufweist, wobei
- die mindestens eine Eingangs- / Ausgangsschnittstelle 8 derart ausgebildet und in dem Modul 7 angeordnet ist, Daten in einem Datenstrom zu empfangen und zu senden,
- das mindestens eine Speichermedium 10 derart ausgebildet und in dem Modul 7 angeordnet ist, Informationen zu speichern, und
- der mindestens eine Prozessor 9 derart ausgebildet und in dem Modul 7 angeordnet ist, die auf dem Speichermedium 10 gespeicherte Informationen, gegebenenfalls zusammen mit empfangenen Daten, in einem Datenstrom über die Eingangs- / Ausgangsschnittstelle 8 zu senden.

9. Modul 7 nach Anspruch 8, wobei der Prozessor 9 die Informationen in freie Bereiche in dem Datenstrom eingefügt.

10. Modul 7 nach einem der Ansprüche 8 oder 9, wobei der Prozessor 9 für das Einfügen der Informationen in den Datenstrom, Daten in dem Datenstrom löscht.

11. Modul 7 nach einem der Ansprüche 8 bis 10, wobei das Modul 7 mindestens eine Befehlsschnittstelle 11 aufweist und der Prozessor 9 derart ausgebildet und in dem Modul angeordnet ist, dass er in Abhängigkeit von über die Befehlsschnittstelle 11 empfangenen Daten, die auf dem Speichermedium 10 gespeicherten Informationen sendet.

12. Modul nach Anspruch 11, wobei das Modul 7 auf der Grundlage der über die Befehlsschnittstelle 11 empfangenen Daten erkennt, welcher Teil des Datenstroms vom Empfänger 1 nicht verwendet wird.

13. Modul 7 nach einem der Ansprüche 8 bis 12, wobei der mindestens eine Prozessor 9 derart ausgebildet und in dem Modul 7 angeordnet ist, Informationen aus dem empfangenen Datenstrom auszuwählen und auf dem Speichermedium 10 zu speichern.

14. Modul 7 nach einem der Ansprüche 8 bis 14, wobei das Modul 7 auch einen Descrambler 6 zum Entschlüsseln von Daten aufweist.

15. Empfänger 1 zum Empfangen von digitalen Daten mit einem Modul 7 gemäß einem der Ansprüche 9 bis 12.
